(19) **Europäisches Patentamt**
**European Patent Office**
**Office européen des brevets**

(11) Veröffentlichungsnummer: **0 055 686**
**B1**

(12) **EUROPÄISCHE PATENTSCHRIFT**

(45) Veröffentlichungstag der Patentschrift: **28.05.86**

(51) Int. Cl.⁴: **H 01 T 19/00, B 29 C 63/00**

(21) Anmeldenummer: **81710040.7**

(22) Anmeldetag: **27.08.81**

(54) **Vorrichtung zur Behandlung der aus thermoplastischem Kunststoff bestehenden Aussenfläche von Formkörpern durch Koronaentladung.**

(30) Priorität: **01.12.80 DE 3045259**

(43) Veröffentlichungstag der Anmeldung:
**07.07.82 Patentblatt 82/27**

(45) Bekanntmachung des Hinweises auf die
Patenterteilung:
**28.05.86 Patentblatt 86/22**

(84) Benannte Vertragsstaaten:
**BE FR GB IT LU NL SE**

(56) Entgegenhaltungen:
**DE-A-1 504 206**
**FR-A-2 346 937**
**FR-A-2 419 953**
**FR-E- 72 006**
**US-A-3 183 352**

(73) Patentinhaber: **Firma Carl Freudenberg**
**Höhnerweg 4**
**D-6940 Weinheim/Bergstrasse (DE)**
(73) Patentinhaber: **Klaus Kalwar**
**Alte Landwehr 10**
**D-4803 Steinhagen (DE)**

(72) Erfinder: **Hirschinger, Lothar**
**Unter den Birken 35**
**D-6800 Mannheim 31 (DE)**
Erfinder: **Ebner, Klaus**
**Im Hofacker 17**
**D-6955 Aglasterhausen (DE)**
Erfinder: **Kalwar, Klaus**
**Alte Landwehr 10**
**D-4803 Steinhagen-Amshausen (DE)**
Erfinder: **Freytag, Egon**
**Hauptstrasse 122**
**D-4802 Halle-Künsebeck (DE)**

(74) Vertreter: **Weissenfeld-Richters, Helga, Dr.**
**Höhnerweg 2**
**D-6940 Weinheim/Bergstrasse (DE)**

Courier Press, Leamington Spa, England.

**Beschreibung**

Die Erfindung betrifft eine Vorrichtung zur Behandlung der aus thermoplastischem Kunststoff bestehenden Außenfläche von unregelmäßig geformten Formkörpern, z.B. für den Fahrzeugbau, dur Koronaentladung, wobei die Formkörper durch eine bewegliche Basiselektrode gehalten und in möglischst gleichmäßigem Abstand an einer Gegenelektrode vorbeigeführt werden.

Es ist bekannt, daß die Oberfläche von thermoplastischem Formkörpern durch elektrische Koronaentladungen in ihren Eigenschaften verändert wird. Insbesondere wird die Adhäsion verbessert, so daß eine Veredelung der Oberfläche oder eine nachträgliche Weiterbehandlung erleichtert wird. Manche Kunststoffe, z.B. Polyolefine, wie Polyäthylen oder Polypropylen besitzen Eigenschaften, die normalerweise die Erzielung einer guten Adhäsion von Überzugssubstanzen auf ihre Oberflächen sehr erschweren. Dies erweist sich insbesondere bei kompliziert geformten Teilen, wie sie z.B. im Fahrzeugbau verwendet werden, als äußerst nachteilig, wenn sogenannte Hilfsstoffe wie Farben, Kleber oder dgl. den Trägermaterialien haften sollen. Vielfach ist es auch erwünscht, die Formkörper dauerhaft mit weiteren Materialien zu Verbundstoffen zusammenzufügen.

Es ist bekannt, die Oberfläche von indifferenten Kunststoffen, z.B. Polyolefinen, durch Aufrauhen, durch die Einwirkung von oxydierend wirkenden Chemikalien oder durch Glimm- oder Bogenentladung so zu verändern, daß die Adhäsionseigenschaften verbessert werden. Auch die Oberflächenbehandlung mit Hilfe von Koronaentladung ist nicht mehr neu. So ist beispielsweise durch das deutsche Gebrauchsmuster 17 43 687 eine Anordnung bekannt geworden, die die Oberflächenbehandlung von Kunststoffbahnen durch eine Sprühladung gestattet. Die Kunststoffbahnen laufen dabei zwischen Speühelektroden hindurch. An den freien Elektrodenenden sind Isolierstoffkörper angeordnet, die einen Überschlag an den die Breite der Kunststoffbahnen überragenden Elektrodenabschnitten erschweren bzw. verhindern sollen. Mit dieser bekannten Anordnung ist es jedoch nur möglich, Kunststoff in Form von Bahnen zu behandeln.

Aus der DE—A 12 32 333 ist auch schon eine Vorrichtung zur Behandlung kompliziert geformter Kunststoffteile mit einem elektrischen Koronaeffekt bekannt, die dem im ersten Teil des Anspruchs 1 definierten stand der Technik entspricht. Dabei handelt es sich um Tuben aus Kunststoff, wobei die zu behandelnde Oberfläche in möglichst gleichem Abstand an der Elektrode vorbeistreicht, während die Tube auf einer Innenelektrode steckt, die der Form der Hohlkörpers angepaßt ist und von einer formschlüssig umfassenden Außenelektrode abgedeckt wird. Dadurch ist bereits ein erheblicher Fortschritt in der Behandlung kompliziert geformter Teile erzielt. Das Verfahren ermöglicht die Massenfertigung von Tuben bei großen Stückzahlen und mit geringer Ausschußquote.

Bei der Herstellung von unregelmäßig geformten Formkörpern, wie sie z.B. im Kraftfahrzeugbau üblich sind, ließe sich grundsätzlich das Verfahren DE—A 12 32 333 anwenden. In diesem Falle müßte der Formkörper, z.B. eine Instrumententafel auf eine ihrer Kontur angepaßte Basiselektrode gesetzt werden, wobei eine diese vollständig umfassende und ihrer Form entsprechende Gegenelektrode angebracht werden müßte. Es liegt auf der Hand, daß ein solches Vorgehen nicht nur kostenaufwendig und unrational ist, sondern auch bei der Serienherstellung von unterschiedlich geformten Teilen wegen der großen Anzahl von Basis- und Gegenelektroden nicht durchführbar erscheint.

Aus US—A—3 183 352 ist es bei einer Vorrichtung zur Behandlung mit einer Koronaentladung bekannt, eine Gegenelektrode mit einer Vielzahl elektrisch flexibler Ladungseinheiten in Form einer Bürste auszubilden, deren Borsten sich seitlich an den Formkörper anschmiegen.

Der Erfindung liegt nun die Aufgabe zugrunde, eine wartungs- arm und wirtschaftlich arbeitende Vorrichtung zu entwickeln, die auch bei Massenfertigung komplikationslos eine Koronabehandlung der Oberfläche von sehr kompliziert geformten Kunststoff-Teilen für den Kraftfahrzeugbau gestattet. Hierbei ist es wesentlich, daß auch indifferente Kunststoffe wie Polyolefine, z.B. Polyäthlyen und Polypropylen eingesetzt werden können. Die Oberfläche dieser Kunststoffe soll so verändert werden, daß ihre Adhäsionseigenschaften optimal dem jeweiligen Verwendungszweck entsprechen. Die Oberfläche des zu behandelnden Formteiles muß dabei in möglichst gleichmäßigem Abstand an der Elektrode vorbeigeführt werden, wobei auch verwinkelte Teile und Ecken sicher erfaßt werden können. Bekanntlich wirkt sich eine gleichmäßige Abstandschaltung in hohem Maße auf die Gleichmäßigkeit der vorgenommenen Behandlung aus.

Zur Lösung der gestellten Aufgabe und in Überwindung der aufgezeigten Schwierigkeiten wird eine Vorrichtung zur Behandlung auch unregelmäßigst geformter Teile vorgeschlagen, wie sie in den Patentansprüchen definiert ist.

Die elektronische Koronaentladung erreicht man durch Entladung von Wechselstrompotentialen zwischen den beiden Elektroden, wobei die Basiselektrode vorzugsweise mit einem Dielektrikum versehen ist. Das Dielektrikum als Isolierstoff hat die Aufgabe, eine flächendeckende Entladung zu gewährleisten.

Die erfindungsgemäße Vorrichtung erlaubt die Behandlung auch versteckter Stellen, wie Ecken, Vertiefungen oder dgl., weil die flexiblen Entladungseinheiten sich den Konturen des Formkörpers in optimaler Form anpassen. Die Basiselektrode ist beweglich gelagert, z.B. auf einem umlaufenden Förderband, auf Transportpaletten oder dgl. und füllt die Innenform des behandelnden Teiles aus. Es ist so möglich, auch verschiedene Basiselektroden mit unterschiedlichen Formteilen auf einem Förderband an der Gegenelektrode mit den flexiblen Entladungseinheiten vorbeizuführen und in einem Arbeitsgang die Behandlung einer ganzen Serie von Formteilen vorzunehmen.

Die Vorrichtung berücksichtigt die unterschiedlichsten Abmessungen und bedingt große Toleranzen unter der Forderung einer rationellen Fertigung. Es ist nicht mehr notwendig, ein der Geometrie des Formkörpers entsprechendes Elektrodensystem z.B. nach DE—A 12 32 333 herzustellen, weil das erfindungs-gemäß vorgeschlagene Elektrodensystem weitgehend anpassungsfähig ist.

Die flexiblen Entladungseinheiten weisen je nach dem Verwendungszweck eine unterschiedliche Formgebung auf, außerdem haben die den Vorteil, daß sie sich entsprechend der vorhandenen elektrischen Kräfte selbständig orientieren. Bevorzugt werden metallische Ketten oder Federn. Der zu behandelnde Formkörper wird auf die Basiselektrode aufgesetzt und dann durch die anpassungsfähige Gegenelektrode hindurchbewegt. Während der Behandlung unter der Gegenelektrode kann die Basiselektrode mit dem zu behandelnden Formkörper axiale oder radiale Relativbewegungen zueinander vollziehen. Die Gegenelektrode ist höhenverstellbar und schwenkbar, so daß eine den Konturen des Formkörpers entsprechende Nachjustierung ermöglicht wird. Hierdurch wird eine flächendeckende Koronabehandlung auch in den kritischen Ecken der Formkörpers erreicht.

Bei der Herstellung von Formteilen für den Kraftfahrzeugbau wie z.B. Instrumententafel, Tunnelabdeckungen, Seitenverkleidungen, Durchführungen für Rohre und Leitunge, die aus Kunststoff bestehen oder mit Kunststoff oberflächlich beschichtet sind, hat sich die Verwendung von Ketten als flexible Entladungseinheiten bewährt. Es ist die Eigenart einer elektrischen Sprühentladung, daß sich diese insbesondere an Enden und Ecken von leitfähigen Körpern entwickelt, wenn eine hochfrequente Hoch-Spannung angelegt wird. Bei einer Kette treten diese Wirksamkeiten praktisch an jedem Glied auf, wodurch es zu einer Vielzahl-Entladungen kommt, die bei entsprechender Relativbewegung von Elektroden und zu behandelndem Formkörper einer besonders guten Effekt erzielen. In den Zeichnungen ist die Erfindung wie folgt erläutert:

Es zeigt

Figur 1 eine perspektivische Darstellung der erfindungsgemäßen Vorrichtung

Figur 2 ein Schema über das Prinzip des elektrischen Behandlungssystems

Figur 3 ein Schema für einen Meßwertaufnehmer über die Auswirkung der Antriebe

Figur 4 eine Darstellung der büschelhalten Entladung

Figur 5 eint beispielhafte Basiselektrode

Figur 6 einen Ausschnitt aus der Gegenelektrode

Figur 7 eine beispielhafte Ausführung für eine Gegenelektrode

Figur 8 eine zur Regulierung der Entladungseinheiten geeignete Stellschraube

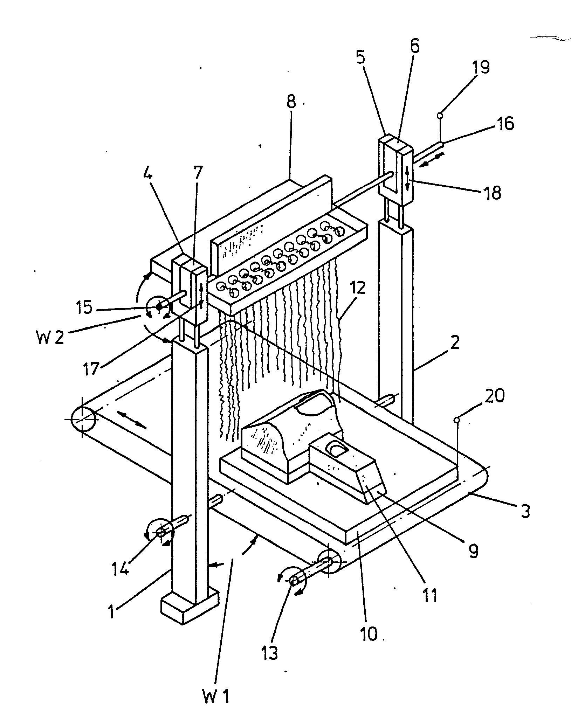

In den Stützen 1 und 2 gemäß Figur 1 ist ein Förderband 3 abgebracht. Die Elektrodenstützen 4 und 5 mit den Elektrodenhaltern 6 und 7, die die Gegenelektrode 8 tragen, sind ebenfalls an den Stützen 1 und 2 angeordnet. Auf dem Förderband 3 befindet sich die Basiselektrode 9 aus einem Haltesystem 10.

Auf der Basiselektrode 9 ist ein Formkörper 11 angeordnet, welcher der Koronabehandlung unterworfen wird. In der Gegenelektrode 8 sind flexible Entladungseinheiten 12, beispielsweise in Form von Ketten, befestigt. Die Ketten besitzen zweckmäßig eine unterschiedliche Länge, so daß eine optimale Anpassung an den zu handelnden Formkörper 11 ermöglicht wird.

Das Transportband 3 wird durch die Welle 13 angetrieben. Bei seiner Bewegung kann es um den Winkel W 1 mit dem Antrieb 14 reversierend geschwenkt werden. Hierdurch ist es möglich, kritische Rundungen und Ecken des Formkörpers 11 mit den flexiblen Entladungseinheiten 12 zu erreichen. Vergleichbares gilt für die Schwenkung der Gegenelektrode 8 mit dem Antrieb 15 um den Winkel W 2. Es ist zusätzlich möglich, mit Hilfe des Antriebs 16 eine relative Bewegung der Gegenelektrode 8 im Winkel von 90° zur Bewegungsrichtung des Förderbandes 3 durchzuführen.

Ferner ist es möglich, mit den Antrieben 17 und 18 die Höhe der Gegenelektrode 8 einseitig unterschiedlich gegenüber der Basiselektrode 9 einzustellen. Die Gegenelektrode 8 wird über den Klemmpunkt 19 und die Basiselektrode 9 über den Klemmpunkt 20 an eine hochfrequente Hoch-Spannung gelegt und bei Hindurchbewegung des Formkörpers 11 gegenüber den flexiblen Entladungsträgern 12 entsteht an diesen eine elektrische Koronaentladung, wodurch die gewünschte Veränderung der Adhäsionseigenschaften der Oberfläche des Formkörpers 11 erzielt werden.

Figur 2 gibt das Prinzip des elektrischen Behandlungssystems wieder. Dem Generator 21 wird über die Funktionslinie 22 elektrische Energie mit Netzspannung und Netzfrequenz zugeführt. Im Generator 21 wird die Energie auf ein Hochfrequenz-Niveau ungewandelt und über die Funktionslinie 23 einem Endübertrager 24 zugeleitet. Im Endübertrager 24 findet die Transformation zu einer Hochspannung, die über die Klemmpunkte 19 und 20 an die Elektroden 8 und 9 angelegt wird, statt.

Der Formkörper 11 kann nun bei Entladung des Elektrodensystems behandelt werden.

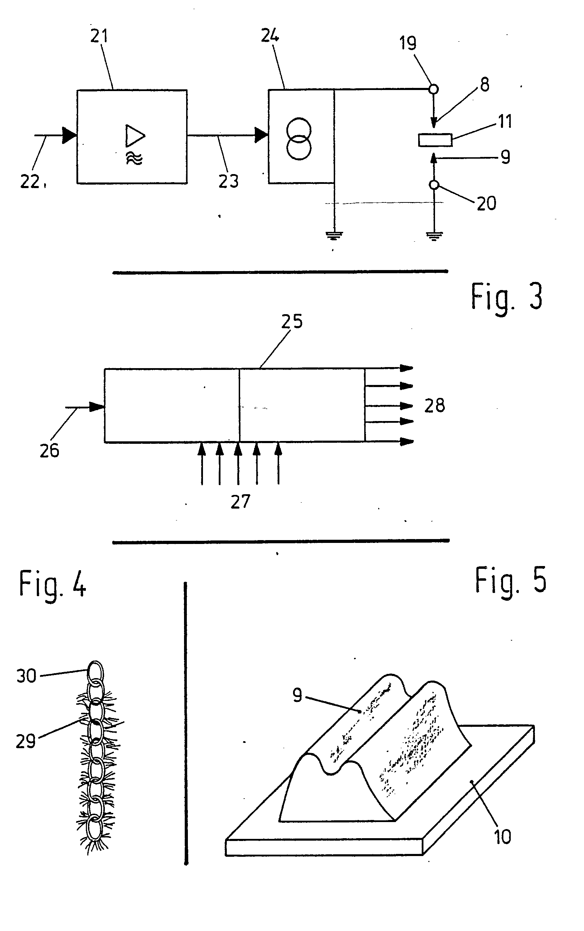

Figur 3 zeigt das Prinzip eines Steuerungsgerätes 25. Wie aus Figur 1 ersichtlich ist, besitzt die Vorrichtung diverse Antriebe, die je nach Bedarf entsprechend der Formkörper-Ausbildung für die Koronabehandlung des Formkörpers 11 in Betrieb genommen werden können. Die Auswirkung der Antriebe werden in geeigneten Messwert-Aufnehmern erfaßt und für Steuerungszwecke weiterverarbeitet. Diese Verarbeitung erfolgt in dem Steuerungsgerät 25. In dem Steuerungsgerät 25 wird die Energie über die Funktionslinie 26 zugeführt, für die Funktionslinien 27 werden die Messergebnisse der Antriebe 13, 14, 15, 16, 17 und 18 dem Gerät 25 zugeordnet und über die Funktionslinien 28 erfolgt die sinnvolle Steuerung der Antriebe.

Figur 4 zeigt ein besonders günstiges Beispiel für einen Entladungsträger 12. Es handelt sich um eine Kette 30 mit einer büschelhaften Entladung 29 durch Anlegung einer hochfrequenten Hochspannung.

Figur 5 zeigt die Basiselektrode 9, welche in der Regel aus einem gieß- und formfähigen Material, z.B. einem Thermo- oder Duroplast mit Zusätzen für die Beeinflussung der elektrischen Leitfähigkeit besteht. Die Elektrode 9 ist auf einer Grundplatte 10 fest montiert. Beide Können auf dem Transportband 3 angeordnet werden.

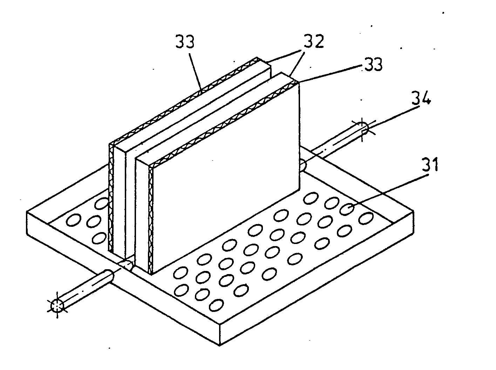

Figur 6 beschreibt die Gegenelektrode 8 als Teil der Gesamtvorrichtung näher. Ein Lochblech ist so geformt, daß es die Gesamtfläche des zu behandelnden Formkörpers 11 in Breite und Tiefe abdeckt. In den Löchern 31 können die Entladungsträger 12, z.B. in Form von Ketten Leicht eingehangen und bezüglich ihrer Länge dem Formteil 11 angepaßt werden. An der Elektrode sind zwei Deckel 32 vorgesehen, die auf der Unterseite eine elastische Materialschicht 33 besitzen. Hierdurch ist es möglich, daß bei zugeklapptem Deckel die eingehangenen Ketten in den Löchern 31 durch Klemmung fixiert werden. Die Achse 34 ist so dimensioniert, daß die Elektrode leicht austauschbar ist.

Figur 7 zeigt eine Möglichkeit für eine Gegenelektrode 8. An der Achse 34 befindet sich eine Plattenanordnung 36 mit Schraubenanbringung 37, an deren Enden Federn 38 befestigt sind. Bei Vertikalbewegung der Elektrode und Aufdruck der Federn auf den zu behandelnden Formkörper 11 entstehen an den Enden und Kanten der Federn 38 die gewünschten elektrischen Entladungen.

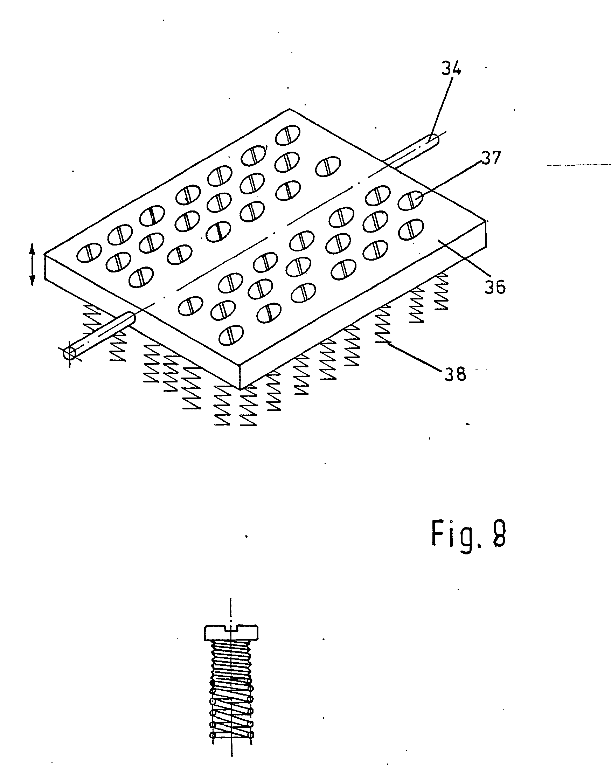

Figur 8 zeigt eine Stellschraube, an der eine Druckfeder befestigt ist.

**Patentansprüche**

1. Vorrichtung zur Behandlung einer aus thermoplastischem Kunststoff bestehenden Außenfläche von unregelmäßig geformten Formkörpern (11) mit einer ihrer Außenflächen gegenüberliegenden Innenfläche, z.B. für den Fahrzeugbau, durch Koronaentladung, mit einer den Formkörper haltenden auf einem bewegbaren Träger (3) befestigten und an den Formkörper angepaßten Basiselektrode (9) sowie mit einer an einem Halter (6, 7) angeordneten Gegenelektrode (8) zur Beeinflussung einer Fläche des Formkörpers, dadurch gekennzeichnet, daß die Basiselektrode (9) die Innenfläche des Formkörpers aufnimmt und daß die Gegenelektrode (8) eine Vielzahl elektrisch leitender flexibler Entladungseinheiten (12) aufweist, die nebeneinander benachbart gehalten sind und die in Richtung auf die Basiselektrode eine variable, sich von sich aus an die Oberfläche des Formkörpers anpassende Längsausdehnung aufweisen.

2. Vorrichtung nach Anspruch 1, dadurch gekennzeichnet, daß die Basiselektrode (9) mit einem Dielektrikum beschichtet ist.

3. Vorrichtung nach einem der Ansprüche 1 oder 2, dadurch gekennzeichnet, daß die Entladungseinheiten (12) metallische Ketten (30) oder elastische Federn (38) sind.

4. Vorrichtung nach einem der Ansprüche 1 bis 3, dadurch gekennzeichnet, daß die Entladungseinheiten (12) untereinander eine unterschiedliche und dem Abstand zwischen Gegenelektrode (8) und Außenfläche des Formkörpers (11) angepaßte Länge aufweisen.

5. Vorrichtung nach einem der Ansprüche 1 bis 4, dadurch gekennzeichnet, daß die Gegenelektrode (8) ein die gesamte Außenfläche des Formkörpers (11) überdeckendes Lochblech ist, und daß die Entladungseinheiten (12) in den Löchern (31) des Lochbleches befestigbar sind.

6. Vorrichtung nach Anspruch 5, dadurch gekennzeichnet, daß die Entladungseinheiten (12) mit Hilfe eines Deckels (32) in den Löchern (31) durch Klemmung fixierbar sind.

7. Vorrichtung nach Anspruch 5, dadurch gekennzeichnet, daß die Entladungseinheiten (12) mit Hilfe von Stellschrauben justierbar in den Löchern des Lochbleches befestigt sind.

8. Vorrichtung nach einem der Ansprüche 1—7, dadurch gekennzeichnet, daß die Gegenelektrode (8) schwenkbar, drehbar und höhenverstellbar gelegt ist.

**Revendications**

1. Dispositif pour traiter, par décharge Corona, la surface extérieure en matière plastique thermoplastique d'éléments préformés irréguliers (11) avec une surface intérieure opposée à sa surface extérieure et destinée, par exemple, à la construction automobile, avec une électrode de base (9) adaptée à l'élément préformé et fixée sur un support mobile (3), portant l'élément préformé, ainsi qu'avec une contre-électrode (8) disposée sur un porte-électrodes (6, 7), afin de modifier une surface de l'élément préformé, caractérisé en ce que l'électrode de base (9) reçoit la surface intérieure de l'élément préformé et en ce que la contre-électrode (8) présente de nombreuses unités de décharge (12) flexibles et électriquement conductrices, qui sont maintenues à proximité les unes des autres et que présentent un développement en longueur variable en direction de l'électrode de base et s'adaptant à la surface de l'élément préformé.

2. Dispositif selon la revendication 1, caractérisé en ce que l'électrode de base (9) est recouverte d'un diélectrique.

3. Dispositif selon l'une des revendications 1 ou 2, caractérisé en ce que les unités de décharge (12) sont des chaînes métalliques (30) ou des ressorts élastiques (38).

4. Dispositif selon l'une des revendications 1 à 3, caractérisé en ce que les unités de décharge (12) présentent des longueurs diverses et adaptées à la distance entre la contre-électrode (8) et la surface extérieure de l'élément préformé (11).

5. Dispositif selon l'une des revendications 1 à 4, caractérisé en ce que la contre-électrode (8) est une tôle perforée, recouvrant toute la surface de l'élément préformé (11) et en ce que les unités de décharge (12) peuvent être fixées dans les trous (31) de la tôle perforée.

6. Dispositif selon la revendication 5, caractérisé en ce que les unités de décharge (12) peuvent être fixées par coïncement dans les trous (31) à l'aide d'un couvercle (32).

7. Dispositif selon la revendication 5, caractérisé en ce que les unités de décharge (12) sont fixées dans les trous de la tôle perforée, avec possibilité de réglage, à l'aide de vis de réglage.

8. Dispositif selon l'une des revendications 1 à 7, caractérisé en ce que la contre-électrode (8) est montée avec possibilité de rotation, de basculement et de réglage en hauteur.

**Claims**

1. A device for treating an outer surface of thermoplastics material of an irregularly shaped moulding (11) having an inner surface located opposite its outer surface, for example in vehicle construction, by corona discharge using on the one hand a base electrode (9) which holds the moulding, is fixed to a movable carrier (3) and matches the moulding and on the other hand a counterelectrode (8) which is located on a holder (6, 7), in order to influence one surface of the moulding, characterised in that the base electrode (9) accommodates the inner surface of the moulding and that the counter-electrode (8) possesses a plurality of electrically conductive flexible discharge units (12) held adjacent to one another and of a length which is variable in the direction toward the base electrode and which adapts itself automatically to the surface of the moulding.

2. A device according to claim 1, characterised in that the base electrode (9) is coated with a dielectric.

3. A device according to claim 1 or 2, characterised in that the discharge units (12) are metallic chains (30) or elastic springs (38).

4. A device according to any of claims 1 to 3, characterised in that the discharge units (12) are of differing lengths, adapted to the distance between the counter-electrode (8) and the outer surface of the moulding (11).

5. A device according to any of claims 1 to 4, characterised in that the counter-electrode (8) is a perforated metal sheet which covers the entire outer surface of the moulding (11) and that the discharge units (12) can be fastened in holes (31) in the perforated sheet.

6. A device according to claim 5, characterised in that the discharge units (12) can be fastened in the holes (31) by clamping by means of a cover (32).

7. A device according to claim 5, characterised in that the discharge units (12) are fastened in the holes of the perforated metal sheet so as to be adjustable by means of adjustment screws.

8. A device according to any of claim 1 to 7, characterised in that the counter-electrode (8) is arranged so as to be pivotable, rotatable and adjustable in height.

Fig. 3

Fig. 4

Fig. 5

Fig. 8